# EUROPEAN PATENT APPLICATION

(11) **EP 2 073 595 A1**
(43) Date of publication of application: **24.06.2009**
(21) Application number: 07150173.8
(22) Date of filing: 19.12.2007
(51) Int. Cl.: H04W 84/00

(54) **Methods, apparatuses and computer program product for providing I-WLAN mobility**

(71) Applicant: Nokia Siemens Networks Oy, 02610 Espoo (FI)
(72) Inventor: Punz, Gottfried, 1080, Wien (AT)
(74) Representative: TBK-Patent

(57) **Abstract**

A device is described which comprises a controller configured to control a first network control element of a first access type network, wherein an address pool common for the first network control element and a second network control element of a second access type network is provided, and a receiver configured to receive packets sent to the first network control element and the second network control element.

## Description

### BACKGROUND OF THE INVENTION

### Field of the invention

The invention relates to a device and a method for providing mobility via different access type networks.

### Description of the related art

The invention relates in particular to interworked wireless local area network (I-WLAN) mobility. In particular, 3GPP SA2 has conducted a study on I-WLAN mobility, as described in 3GPP TR 23.827 V0.4.0 (2007-09), *"Feasibility Study of Mobility between 3GPP-WLAN Interworking and 3GPP Systems."* The target was to describe solutions for mobility between 3GPP I-WLAN access and 3GPP general packet radio services (GPRS) access for the time before introducing system architecture evolution (SAE), i.e., for the pre-SAE timeline (note that the problem will be solved in course of the SAE design). Service continuity shall be supported with minimal impact on the end user's perceived quality; the solutions shall have minimal impact on terminals and (core and access) networks.

Several potential solutions are contained in the above referenced Technical Report TR 23.827 V0.4.0. Based on the evaluation of alternative solutions, 3GPP SA2 has started to specify solution C described in the following.

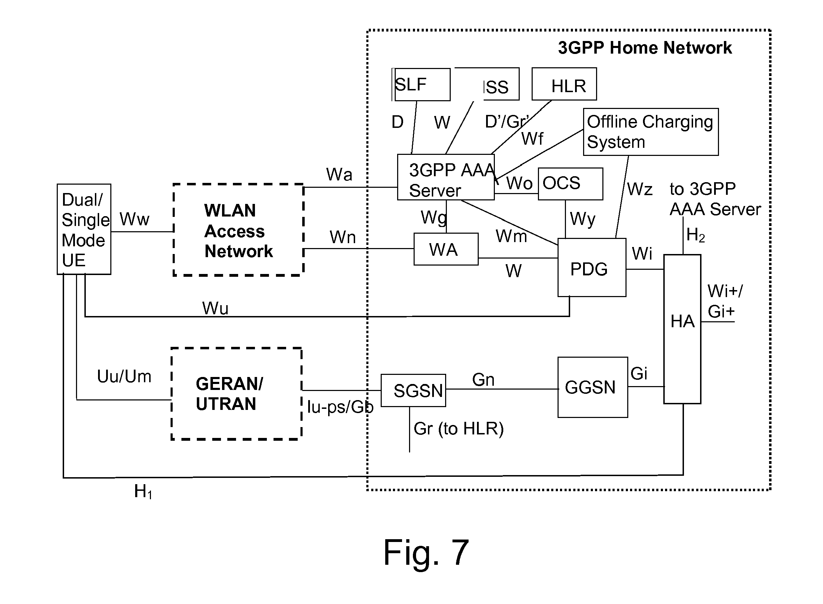

Fig. 7 shows this architecture alternative solution C as contained in TR 23.827 based on client mobile internet protocol DSMIPv6 (dual stack mobile internet protocol version 6), as described in H. Soliman (ed.), "Mobile IPv6 support for dual stack Hosts and Routers (DSMIPv6)", draft-ietf-mip6-nemo-v4traversal-04, March 2007.

As shown in Fig. 7, a dual/single mode user equipment (UE) is connected via a WLAN access network and a GERAN (GSM EDGE radio access network )/UTRAN (UMTS terrestrial radio access network ) with a 3GPP home network, whereas the WLAN access network is connected via a WLAN access gateway (WAG) to a packet data gateway (PDG).

In more detail, regarding the 3GPP WLAN access network, the dual/single mode UE is connected with the WLAN access network via a Ww interface. The WLAN access network is connected via the Wa interface to a 3GPP authentication, authorisation and accounting (AAA) server, and is connected via a Wn interface with a WAG. The AAA server and WAG are interconnected via a Wg interface. The 3GPP interface is connected via D interface with a service location function (SLF), via a W interface with a home subscriber server (HSS), via a D'/Gr' interface with a home location register (HLR), via a Wf interface with an offline charging system, via a Wo interface with an online charging system (OCS), via a Wm interface with the packet data gateway (PDG) and via a Wm interface. The offline charging system also connected with the PDG via a Wz interface. The WAG and the PDG are interconnected via a Wp interface. Between the dual/single mode UE and the PDG, there is also defined a Wu interface.

Regarding the 3GPP access network, it is noted that the dual/single mode UE is connected with the GERAN/UTRAN via an Uu/Um interface, whereas the GERAN/UTRAN is connected with a SGSN via an lu-ps/Gb interface. The SGSN is connected with the HLR via a Gr interface. The SGSN is connected with a GGSN* via a Gn interface.

A home agent (HA) is connected to the GGSN* and PDG through Gi and Wi interfaces. The home agent is connected with the 3GPP AAA server via a H2 interface, and is also connected with the dual/single mode US via a H1 interface. The home agent may be co-located with GGSN or PDG and terminates the DSMIPv6 signalling within the network.

The two involved access networks, the 3GPP access network and the 3GPP-WLAN interworking access network, are kept separately and no direct interworking between them is proposed. Also no changes are needed for the defined initial attach, session set-up, etc. procedures within the two different access systems. The UE has to initiate DSMIPv6 specific signalling towards the home agent to create a binding in the HA and to register its care-of-address. This will on one side establish the DSMIPv6 tunnel between the HA and the UE and on the other side ensure that mobile terminated traffic is routed by the HA towards the correct access network.

In this architecture, the following enhancements are needed to enable I-WLAN mobility. A home agent functionality has to be added to the 3GPP Home Network. The dual mode/single mode UE needs to be enhanced by a DSMIPv6 client to enable the DSMIPv6 based signalling towards the Home Agent. The architecture as illustrated in Fig. 7 is able to support both types of UE, dual mode and single mode UEs. In case that a single mode UE will be used, seamless service continuity is not possible. Regarding GGSN and PDG, there are, in case the HA is not co-located with GGSN and PDG, no changes to GGSN and PDG required, i.e. all of the existing procedures could be used as already defined for GPRS and I-WLAN. Due to the fact that the DSMIPv6 signalling is transparent for the GGSN as well as for the PDG no specific MIP functionality is needed on both entities.

In addition, it is noted that Wi+/Gi+ indicates a reference point which defines the interface from the HA outwards (whereas Gi and Wi are within this mobility architecture). H₁ is a reference point for mobility signalling between UE and HA. H₂ is a reference point which defines the interface between HA and 3GPP AAA server and is used for authentication of mobility signaling.

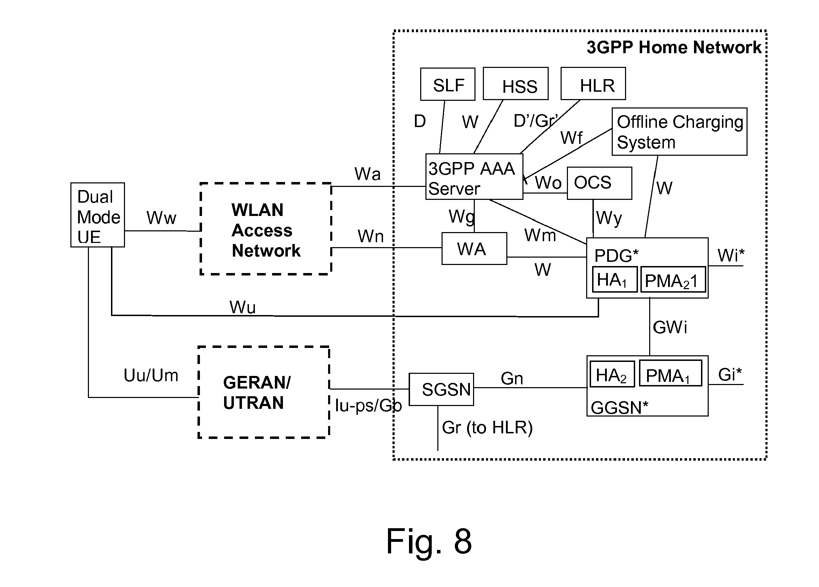

Fig. 8 shows an architecture of an alternative based on proxy MIP (not documented in TR 23.827 V0.4.0). The architecture as such is similar to that shown in Fig. 7, with the exception that the PDG* comprises a home agent HA₁ and a proxy mobile agent PMA₂, and that the GGSN comprises a home agent HA₂ and a proxy mobile agent PMA₁. Furthermore, only a dual mode UE is present, and the H1 reference point and the connection between the UE and the HA is no longer present.

Other proposed solutions contained in TR 23.827 are based on the implementation of PDG as TTG plus "Rest of GGSN" with Gn interface between them, as defined in the normative annex F in TS 23.234 V7.5.0.

All these solutions have disadvantages with respect to either
(1) complexity or
(2) terminal impact or
(3) impact on existing network nodes or
(4) time to market or
(5) combinations of these.

This is a real concern for operators.

### SUMMARY OF THE INVENTION

Thus, several embodiments aim to provide solutions to overcome the problems mentioned above, wherein mobility between different access type network can be achieved without large modifications to the network elements involved.

This is achieved by methods, devices and a system as defined in the appended claims. The invention may also be implemented as a computer program product.

According to several embodiments, a device is provided which comprises a controller configured to control a first network control element of a first access type network, wherein an address pool common for the first network control element and a second network control element of a second access type network is provided, and a receiver configured to receive packets sent to the first network control element and the second network control element.

According to several embodiments a method is provided which comprises receiving packets sent to a first network control element of a first network access type network and a second network control element of a second access type network, wherein an address pool common for the first network control element and a second network control element of a second access type network is provided.

According to several embodiments, a method is provided comprising configuring a network system comprising a first access type network and a second access type network, and providing a common address pool for a first network control element of the first access type network and a second network control element for the second access type network.

According to several embodiments, a system is provided which comprises a first access type network and a second access type network, and a first network control element of the first access type network and a second network control element for the second access type network, wherein the first network control element and the second network control element comprise a common address pool.

Thus, two network control elements (e.g., a gateway general packet radio system support node (GGSN) and a packet data gateway (PDG)) of two different access type network (e.g., GSM EDGE radio access network (GERAN) and a wireless local area network (WLAN)) have a common address pool. Hence, signalling directed to this address pool is received by both network control element, so that mobility between the two different access type networks can be achieved in achieved, without a need for large modifications to the network elements involved.

### BRIEF DESCRIPTION OF THE DRAWINGS

Embodiments of the invention are described by referring to the enclosed drawings, in which:
Fig. 1 shows a structure of a GGSN and a PDG according to an embodiment of the invention,
Fig. 2 shows a signalling flow according to the embodiment,
Fig. 3 shows configurations which enable coordinated PDGs and GGSNs according to the embodiment,
Fig. 4 shows address pools for coordinated PDG and GGSN,
Fig. 5 shows an L2 coordination between one PDG and one GGSN according to the embodiment,
Fig. 6 shows an L2 coordination between two PDGs and one GGSN according to the embodiment,
Fig. 7 shows a non-roaming architecture for I-WLAN mobility based on client MIP, and
Fig. 8 shows a non-roaming architecture for I-WLAN mobility based on proxy MIP.

### DETAILED DESCRIPTION OF THE EMBODIMENTS

In the following, embodiments of the present invention are described by referring to the attached drawings.

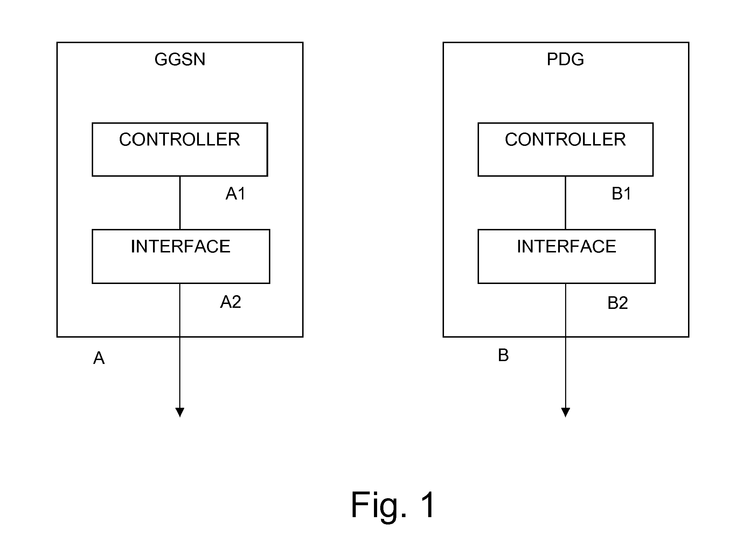

Fig. 1 shows a general outline of network control elements involved in the present embodiment. In Fig. 1, two examples for such network control elements are shown, namely a gateway GPRS (general packet radio system) support node (GGSN) denoted by reference character A, and a packet data gateway (PDG) denoted by reference character B. It is noted that the invention is not limited to these specific examples for network control elements. Furthermore, it is noted that the device according to the embodiments comprises a controller for controlling the network control element (e.g., in Fig. 1 the GGSN or the PDG) and an interface.

Furthermore, an address pool common for the first network control element (e.g., the GGSN) of a first access type network (e.g., GERAN (GSM (global system for mobile communication) EDGE (enhanced data rates for GSM evolution) radio access network and/or UTRAN (UMTS (universal mobile telecommunications system) terrestrial radio access network)) and a second network control element (e.g., the PDG) of a second access type network (e.g., a wireless local area network (WLAN) access network) is provided. The interfaces (as examples for a receiver of the respective network elements) of both network control elements receive packets sent to the first network control element and the second network control element.

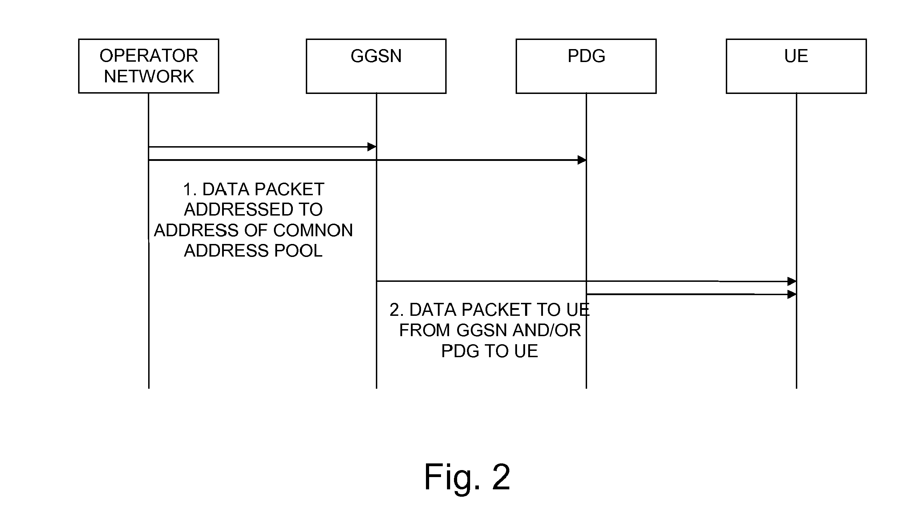

This is also shown in the signalling diagram illustrated in Fig. 2. In step S1, data packets from, e.g., the operator network are sent to both network control elements (GGSN and PDG). Then, the data packets are forwarded from the GGSN and/or the PDG to a user equipment (UE). The UE is preferably a dual mode UE. The forwarding from the GGSN or the PDG depends on via which network the connection with the UE is actually established, that is, during a handover in dual radio mode from one access network to the other, the data packets may be sent from both the GGSN and the PDG to the UE.

In this way, service mobility, in particular I-WLAN mobility can be achieved without large modifications on the network elements involved. That is, the solution according to the present embodiment does not, except for a minimal handover logic in the UE, require modifications on any system component as specified in 3GPP's Release 7. Only proper configuration of the deployed system components is needed.

In the following, basic assumptions and requirements for which the solution is designed are described. It is expressively noted that in particular the requirements only apply for the specific embodiment described in the following, whereas the invention is not limited thereon.
- The I-WLAN mobility service is delivered only to a subset of an operator's subscriber: this is not a limitation, but rather it is shown below that the solution is feasible for that case.
- The I-WLAN mobility service should be combinable with other services with no practical limitation.
- The I-WLAN mobility service is addressable via (W)-APNs: e.g. if a service is addressed by "APN1" in the GPRS access and "WAPN1" in the I-WLAN access, the same service with mobility across these domains can be addressed by e.g. "mob.APN1.WAPN1".
- It is possible in deployments to co-locate PDGs and GGSNs so that they are on the same L2 link:
   ○ in a small network (NW), e.g. only one GGSN and one PDG, this is most likely fulfilled a priori (only one central site may be in use; or if two different sites they can be interconnected with L2 means with reasonable effort and cost).
   ○ In a larger network, i.e. with more PDGs and GGSNs, it becomes progressively easier to locate as many as needed pairs of PDGs and GGSNs

This is described in the following in more detail. First, configurations are described, which enable coordinated PDGs an GGSNs.

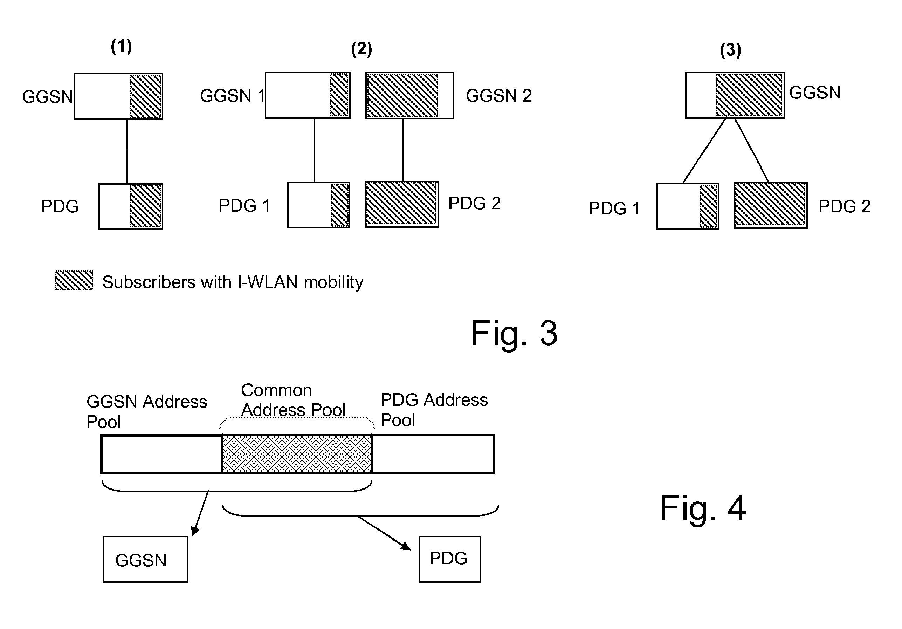

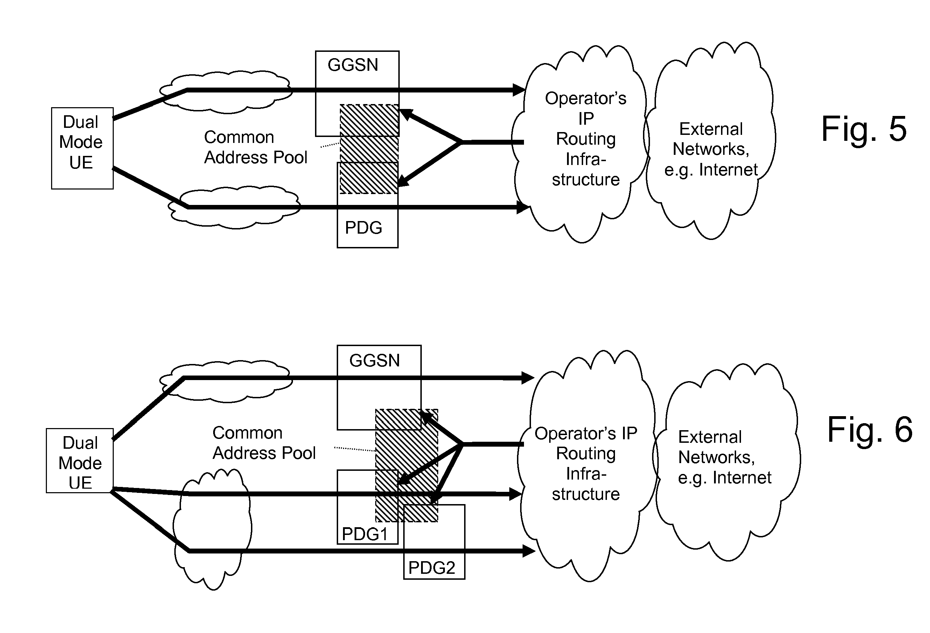

Further building blocks, described below, require the coordination of one PDG and one GGSN per subscriber. Depending on the size of the network, number of subscribers with I-WLAN mobility and capacity of GGSNs and PDGs, one pair of a PDG and a GGSN, several pairs or a more complex arrangement (e.g. one GGSN coordinated with two PDGs) may be necessary. This can be achieved by configuring the domain name server(DNS) accordingly. The three mentioned cases are shown in Fig. 3. (Note that the lines connecting GGSN(s) and PDG(s) are only logical relations, no physical connections; these are shown in Figs. 5 and 6.)

In case (1) only one pair of GGSN and PDG is used, and only a portion of the subscribers handled per node are assigned the I-WLAN mobility service. This case is described below in more detail. The arrangement (2) shows two pairs, where the capacity on PDG2 is fully filled up with I-WLAN mobility subscribers. On GGSN2 these same subscribers are handled, but there is still some capacity left for others (without I-WLAN mobility). The case (3) coordinates two PDGs with only one GGSN. Cases (2) and (3) are not described in full detail here, but can be extrapolated. In addition, also not shown in Fig. 3, a similar coordination between one PDG and two or more GGSNs is possible.

Second, common IP address pools for coordinated PDGs and GGSNs are described.

UE address pools for the split case (i.e. without I-WLAN mobility) are separate for all PDGs and GGSNs. An address pool is defined by a subnet prefix.

According to the present embodiment, for the present solution of I-WLAN mobility common address pools in coordinated PDGs and GGSNs are allowed. These are aligned with the L2/L3 interconnection (see next subsection).

In Fig. 4 an example is given, in which the address pools for GGSN and PDG are shown. The common address pool is indicated by a hatching.

It is noted that the feature of common addresses is used for downlink routing purposes only in the uplink router(s). The assignment of individual IP addresses at attachment of a UE in one of the access systems must be from the common address pool, but from the node (PDG or GGSN) specific portion. In this way a dynamic synchronization of these nodes on already consumed IP addresses, and thus also impact on these nodes, is avoided.

In the following, an L2 coordination between PDGs and GGSNs is described.

In order to realize the coordination between PDGs and GGSNs, the following configurations are proposed: see Fig. 5 for the case of one PDG and one GGSN; Fig. 6 gives an illustration of the case that two PDGs are coordinated with one GGSN. Effectively, the path switching realized in traditional MIP based solutions is substituted by delivering downlink packets to both (or all) involved nodes on L2. This is effected by locating GGSN(s) and PDG(s) on the same, shared L2 link from the IP routing infrastructure.

Thus, according to the present embodiment, all mobility related L3 handling (signaling and tunneling) is replaced by a special L2 interconnection and an L3 address configuration.

This solution has the following advantages:
- no impact on existing network nodes
- no mobility signaling on the UE, nor in the network
- no security handling needed beyond what is already done in GPRS and I-WLAN access, especially neither MIP bootstrapping nor authentication of MIP registrations
- only minimal impact on UE (a logic for handover (HO) decision)
- simplicity, e.g. compared to solutions described in document TR 23.827 V0.0.2.
- it is suitable for IPv4 and IPv6
- the NW part can be realized readily by standard NW configuration

It is noted that the logic for handover in the UE may be based on monitoring of access link properties (e.g. signal strength and signal quality) and may involve rules when to connect and disconnect on a link; for dual radio capability higher layers which deal with duplicate packet processing during the handover phase is needed.

The waste of resources due to distribution of downlink data from the uplink router to all involved coordinated GGSNs/PDGs seems to be no serious problem; it occurs on one link in the core NW, where high capacity for routing is very likely available (not comparable with an air interface). And it is a simple decision to discard the unwanted packets, for those UEs which are currently not attached to one of the access systems.

The invention is not limited to the embodiments described above.

The UE is only an example for an arbitrary network node. In particular, the network node does not have to be mobile.

Also, the GGSN and the PDG are only examples for a network control element, and the functions described above may be carried out by another suitable network control element.

Furthermore, the two access type networks are not limited to WLAN and GERAN/UTRAN, but other different types are possible. Furthermore, the number of access type networks is not limited to two only, it can be any arbitrary number. In this case, a common address pool for all network control elements concerned is provided.

The features described above and shown in the drawings can be used in any arbitrary combination in accordance with one, more or all of the embodiments of the invention.

Method steps likely to be implemented as software code portions and being run using a processor at one of the server entities are software code independent and can be specified using any known or future developed programming language.

Method steps and/or devices likely to be implemented as hardware components at one of the server entities are hardware independent and can be implemented using any known or future developed hardware technology or any hybrids of these, such as MOS, CMOS, BiCMOS, ECL, TTL, etc, using for example ASIC components or DSP components, as an example.

That is, for example the device as defined in the attached claims may be configured using the above components.

Moreover, the configuration of the controller of the devices, e.g., as used in the network control elements (e.g., PDG and GGSN as shown in Fig. 1 is described in more detail) can be as follows: The controller may include a CPU and different kinds of memory means such as RAM, ROM, a harddisk, a CD ROM reader or the like. A computer program may be stored in the memory means and may comprise software code portions for carrying out the method according to the embodiments. This computer program may be stored on a recording medium such as a CD-ROM or DVD-ROM, for example, and may be directly loadable into the work memory of the controller. Alternatively, the computer program may be loaded via the network into the memory of the controller.

It is noted that the interfaces may be suitably configured for possible different access technologies of the network concerned.

Generally, any method step is suitable to be implemented as software or by hardware without changing the idea of the present invention.

Devices can be implemented as individual devices, but this does not exclude that they are implemented in a distributed fashion throughout the system, as long as the functionality of the device is preserved.

It is to be understood that the above description is illustrative of the invention and is not to be construed as limiting the invention. Various modifications and applications may occur to those skilled in the art without departing from the true spirit and scope of the invention as defined by the appended claims.

### List of abbreviations:

- AAA: authentication, authorization and accounting
- (W)-APN: (wireless) access point name
- DNS: domain name server
- DS: dual stack
- EDGE: enhanced data rates for GSM evolution
- GERAN: GSM EDGE radio access network
- GGSN: gateway GPRS support node
- GPRS: general packet radio system
- GSM: global system for mobile communication
- HO: handover
- I-WLAN: interworked WLAN
- IP: internet protocol
- L2: layer 2 (according to ISO-OSI model)
- L3: layer 3 (according to ISO-OSI model)
- MIP: mobile IP
- NW: network
- PDG: packet data gateway
- PMIP: proxy MIP
- SAE: (3GPP) system architecture evolution
- TTG: tunnel termination gateway
- UE: user equipment
- UTRAN: UMTS terrestrial radio access network
- UMTS: universal mobile telecommunications system
- WLAN: wireless local area network

## Claims

1. A device, comprising
a controller configured to control a first network control element of a first access type network, wherein an address pool common for the first network control element and a second network control element of a second access type network is provided, and
a receiver configured to receive packets sent to the first network control element and the second network control element.

2. The device according to claim 1, further comprising a connection configured to connect the first network control element with the second network control element.

3. The device according to claim 2,
wherein the connection is a layer 2 link.

4. The device according to one of the claims 1 to 3,
wherein the addresses of the address pool are assigned to user equipments attachable to the first and the second access type networks.

5. The device according to claim 4, wherein only a part of all addresses of the device is assigned to the common address pool.

6. The device according to one of the claims 1 to 5,
wherein the common address pool is common for the first network control element and a plurality of second network control elements.

7. The device according to one of the claims 1 to 6,
wherein the first network control element is a gateway general packet radio system support node (GGSN) and the second network control element is a packet data gateway (PDG).

8. The device according to one of the claims 1 to 6,
wherein the first network control element is a packet data gateway (PDG) and the second network control element is a gateway general packet radio system support node (GGSN).

9. A method, comprising
receiving packets sent to a first network control element of a first network access type network and a second network control element of a second access type network, wherein
an address pool common for the first network control element and a second network control element of a second access type network is provided.

10. The method according to claim 9, further comprising provisioning of a connection configured to connect the first network control element with the second network control element.

11. The method according to claim 10,
wherein the connection is a layer 2 link.

12. The method according to one of the claims 9 to 11, further comprising assignment of the
addresses of the address pool to user equipments attachable to the first and the second access type networks.

13. The method according to claim 12, wherein only a part of all addresses of the device is assigned to the common address pool.

14. The method according to one of the claims 9 to 13,
wherein the common address pool is common for the first network control element and a plurality of second network control elements.

15. The method according to one of the claims 9 to 14,
wherein the first network control element is a gateway general packet radio system support node (GGSN) and the second network control element is a packet data gateway (PDG).

16. The method according to one of the claims 9 to 14,
wherein the first network control element is a packet data gateway (PDG) and the second network control element is a gateway general packet radio system support node (GGSN).

17. A method comprising
configuring a network system comprising a first access type network and a second access type network, and
providing a common address pool for a first network control element of the first access type network and a second network control element for the second access type network.

18. The method according to claim 17, further comprising providing a connection configured to connect the first network control element with the second network control element.

19. The method according to claim 18,
wherein the connection is a layer 2 link.

20. The method according to one of the claims 17 to 19, further comprising
assigning the addresses of the address pool to user equipments attachable to the first and the second access type networks.

21. The method according to claim 20, wherein only a part of all addresses of the device is assigned to the common address pool.

22. The method according to one of the claims 17 to 21,
wherein the common address pool is common for the first network control element and a plurality of second network control elements.

23. The method according to one of the claims 17 to 22,
wherein the first network control element is a gateway general packet radio system support node (GGSN) and the second network control element is a packet data gateway (PDG).

24. The method according to one of the claims 17 to 22,
wherein the first network control element is a packet data gateway (PDG) and the second network control element is a gateway general packet radio system support node (GGSN).

25. A computer program product for a computer, comprising software code portions for performing the steps of any one of claims 9 to 24 when the program is run on the computer.

26. The computer program product according to claim 25,
wherein the computer program product comprises a computer-readable medium on which the software code portions are stored.

27. A device, comprising
means for controlling a first network control element of a first access type network, wherein an address pool common for the first network control element and a second network control element of a second access type network is provided, and
means for receiving packets sent to the first network control element and the second network control element.

28. A system
comprising a first access type network and a second access type network, and
a first network control element of the first access type network and a second network control element for the second access type network,
wherein the first network control element and the second network control element comprise a common address pool.

29. The system according to claim 28, further comprising a connection configured to connect the first network control element with the second network control element.

30. The system according to claim 29,
wherein the connection is a layer 2 link.
